# EUROPÄISCHE PATENTANMELDUNG

(11) **EP 3 522 121 A1**
(43) Veröffentlichungstag der Anmeldung: **07.08.2019**
(21) Anmeldenummer: 18154478.4
(22) Anmeldetag: 31.01.2018
(51) Int. Cl.: G07C 9/00

(54) **Verfahren zur Gewährung eines Personenzugangs zu von der Person zu Betretenen geschützten Bereichen**

(71) Anmelder: Siemens Schweiz AG, 8047 Zürich (CH)
(72) Erfinder: BRENNER, Heinz, Mönchaltorf 8617 (CH); FISCHER, Michael, 8932 Mettmenstetten (CH); KNAUS LANDOLT, Sandro, 8304 Wallisellen (CH); MARTIN, Matthias, 5313 Klingnau (CH)
(74) Vertreter: Maier, Daniel Oliver

(57) **Zusammenfassung**

Erfindungsgemäss ist ein Verfahren zur Gewährung eines Personenzugangs zu von der Person (12) zu betretenen geschützten Bereichen (4, 6, 8) vorgesehen, umfassend die folgenden Verfahrensschritte:
a) Festlegen eines Ereignisses, das zur Gewährung der mit dem Ereignis verbundenen Dienstleistung einen Zugang zu den geschützten Bereichen (4, 6, 8) erfordert;
b) mit dem Festlegen des Ereignisses Abrufen von die Person individualisierenden zuvor gespeicherten biometrischen Daten von einem entsprechenden Speicher (18) ;
c) Zurverfügungstellen der biometrischen Daten für einen Zugangsdatenpool (20) eines Zugangssystems (22), das Zugangspunkte (24, 26, 28) zu den geschützten Bereichen (4, 6, 8) administriert;
d) Erfassen von biometrischen Daten einer Person an einem Anmeldepunkt (23) oder einem ersten Zugangspunkt (24), die Zugang zu dem durch den Zugangspunkt (24, 26, 28) zugänglichen geschützten Bereich (4, 6, 8) begehrt;
e) Vergleichen der erfassten biometrischen Daten mit den im Zugangsdatenpool (20) befindlichen biometrischen Daten; und
f) Gewährung des Zugangs zu dem geschützten Bereich (4, 6, 8) im Falle eines Vorhandenseins der erfassten biometrischen Daten in dem Zugangsdatenpool (20).

Die Erfindung bietet somit einen Lösungsvorschlag für ein durchgängiges und einfaches Zugangskonzept mit biometrischen Merkmalen. Als biometrische Merkmale kommen dabei der Fingerabdruck und die Augen-Iris in Betracht, die eine Person eineindeutig identifizieren.

## Beschreibung

Die vorliegende Erfindung bezieht sich auf ein Verfahren zur Gewährung eines Personenzugangs zu von der Person zu betretenen geschützten Bereichen.

Bei den Zugangskonzepten geht um eine durchgängige Lösung, bei der eine Person eine Reihe von Sicherheitsprüfungen durchlaufen muss, um an einen Zielort zu gelangen, wie z.B. an einem Flughafen, in einen Tresorraum einer Bank und dergleichen. In der Regel wird heute bei den Zugangskonzepten von Flughäfen, Firmengeländen und anderen sicherheitsrelevanten Einrichtungen auf Systeme mit (temporär) individualisierbaren Batches oder auf Papierausdrucke nach einer ersten Zugangskontrolle gesetzt.

Während die Zugangskontrolle mit Batches vergleichsweise komfortabel ist, besteht jedoch hier der Nachteil, dass ein Zugang in einen geschützten Bereich ohne den Batch nicht möglich ist. Ein Benutzer, der seinen Batch beispielsweise in einem Lesegerät seines Computers vergessen hat und den geschützten Bereich verlässt, ist an einer Rückkehr in den geschützten Bereich verhindert.

Bei den Zugangssystemen in einem Flughafen wird in der Regel beim Check-In eine papierene Boarding-Card oder beim elektronischen Check-In ein Bar-Code für ein mobiles Kommunikationsgerät erstellt. Während die Boarding-Card aus Papier auf dem Weg zum Gate hin verloren gehen kann und es in der Regel so ist, dass der Fluggast die Boarding-Card an den Kontrollstelle immer wieder suchen muss, ist es besonders bei einem Ausfall des mobilen Kommunikationsgeräts, z.B. infolge eines leeren Akkus, mühsam weiter durch die Zutrittskontrollen zu kommen, weil spätestens am Gate eine neue Boarding-Card zu erstellen ist.

Der vorliegenden Erfindung liegt daher die Aufgabe zugrunde, ein Verfahren zur Gewährung eines Personenzugangs zu von der Person zu betretenen geschützten Bereichen anzugeben, das eine sichere und aufwandfreie Zugangsgewährung zu den gesicherten Bereichen zulässt.

Diese Aufgabe wird erfindungsgemäss durch ein Verfahren zur Gewährung eines Personenzugangs zu von der Person zu betretenen geschützten Bereichen, gelöst, welches die folgenden Verfahrensschritte umfasst:
a) Festlegen eines Ereignisses, das zur Gewährung der mit dem Ereignis verbundenen Dienstleistung einen Zugang zu den geschützten Bereichen erfordert;
b) mit dem Festlegen des Ereignisses Abrufen von die Person identifizierenden zuvor gespeicherten biometrischen Merkmalen von einem entsprechenden Speicher;
c) Zurverfügungstellen der biometrischen Daten für einen Zugangsdatenpool eines Zugangssystems, das Zugangspunkte zu den geschützten Bereichen administriert;
d) Erfassen von biometrischen Daten einer Person an einem Zugangspunkt, die Zugang zu dem durch den Zugangspunkt zugänglichen geschützten Bereich begehrt;
e) Vergleichen der erfassten biometrischen Daten mit den im Zugangsdatenpool befindlichen biometrischen Daten; und
f) Gewährung des Zugangs zu dem geschützten Bereich im Falle eines Vorhandenseins der erfassten biometrischen Daten in dem Zugangsdatenpool.

Die Erfindung bietet somit einen Lösungsvorschlag für ein durchgängiges und einfaches Zugangskonzept mit biometrischen Merkmalen. Als biometrische Merkmale kommen dabei der Fingerabdruck und die Augen-Iris in Betracht, die eine Person eineindeutig identifizieren. Mit der Festlegung des Ereignisses, zu dessen Erfüllung die Person in mindestens einen geschützten Bereich eintreten muss, wird schon ein Auftrag für die Übermittlung der die Person identifizierenden biometrischen Daten von einer Datenbank, meist hoheitlich besonders gesichert, an den Zugangsdatenpool ausgelöst. Auf diese Weise ist sichergestellt, dass die biometrischen Daten der Person in dem Zugangsdatenpool des Zugangssystems vorhanden und dass vor allen Dingen auch nur die biometrischen Daten in dem Zugangsdatenpool vorhanden sein müssen, die aufgrund des festgelegten Ereignisses auch Zugang zu geschützten Bereichen erhalten sollen.

In einer zweckmässigen Ausgestaltung der vorliegenden Erfindung kann mit der Festlegung des Ereignisses eine Datenbank, auf der die biometrischen Daten der Person gespeichert sind, aufgefordert werden, die biometrischen Daten an den Zugangsdatenpool zu übertragen. Auf diese Weise kann auch gewährleistet bleiben, dass beispielsweise geschützte Passdaten somit nur von einer hoheitlichen Datenbank beispielsweise der Passbehörden zu einer anderen hoheitlichen Datenbank beispielsweise der Flughafenpolizei übertragen werden müssen. Grundsätzlich wäre es sogar möglich, dass die Passbehörden und die Flughafenpolizei auf dieselbe Datenbank zugreifen können und in dem Zugangsdatenpool nur eine temporäre Untermenge dieser Datenbank abgebildet wird.

Zur Begrenzung des Datenvolumens in dem Zugangsdatenpool ist es besonders zweckmässig, wenn mit der Festlegung des Ereignisses ein Zeitraum definiert wird, während dessen der Person Zugang zu den geschützten Bereichen gewährt werden soll. Nur während dieses Zeitraum ist dann auch der entsprechende Datensatz der diese Person individualisierenden biometrischen Daten in dem Zugangsdatenpool zu bevorraten. Folglich ist es dann sinnvoll, wenn entsprechend des definierten Zeitraums eine Gültigkeit des Datensatzes der biometrischen Daten in dem Zugangsdatenpool auf diesen Zeitraum limitiert ist.

Um eine hinreichende Flexibilität des Zugangssystems gewährleisten zu können, kann bei einer Änderung des Ereignisses entsprechend auch der definierte Zeitraum an die Änderung angepasst werden. So kann beispielsweise bei einer Verspätung eines Fluges die Gültigkeitsdauer der Passagierdaten für diesen Flug in dem Zugangsdatenpool entsprechend angepasst bzw. verlängert werden. Auch eine Änderung des Abfluggates oder Terminals kann so entsprechend abgebildet werden.

In einer vorteilhaften Ausgestaltung der vorliegenden Erfindung kann das festgelegte Ereignis eine Flugbuchung sein. Mit dem Abschluss der Buchung ist so festgelegt, wann der Fluggast in dem entsprechenden Flughafen welches Zugangspunkte zu gesicherten Bereichen durchlaufen muss, um rechtzeitig an dem festgelegten Abfluggate zu sein. Hierbei kann der Zeitraum hinreichend grosszügig bemessen sein.

Zur Bereitstellung von hoheitlich verwalteten Passdaten beispielsweise für die Zugangsgewährung auf einem Flughafen ist es zweckmässig, wenn die Datenbank eine hoheitliche Datenbank zur Speicherung von Passdaten ist. Entsprechend können die Zugangspunkte Personenschranken auf einem Flughafen und/oder für Haltestellen und/oder Zugangstüren in Verkehrsmittel des öffentlichen Fern- und Nahverkehrs sein.

Damit sich die Person zur Gewährung des Zutritts zu den geschützten Bereichen an einem vorbestimmbaren Zugangspunkt anmelden muss, kann es vorgesehen sein das Verfahren in vorteilhafter Ausgestaltung so auszubilden, dass mit der erstmaligen Erfassung der biometischen Daten an einem mit dem Zugangssystem administrierten und für die erstmalige Erfassung bestimmten Zugangspunkt der Datensatz im Zugangsdatenpool, der mit den erfassten biometrischen Daten übereinstimmt, aktiviert und somit für weitere Erfassungsvergleiche an weiteren Zugangspunkten zur Verfügung steht.

Weitere vorteilhafte Ausgestaltungen der vorliegenden Erfindung sind den übrigen Unteransprüchen zu entnehmen.

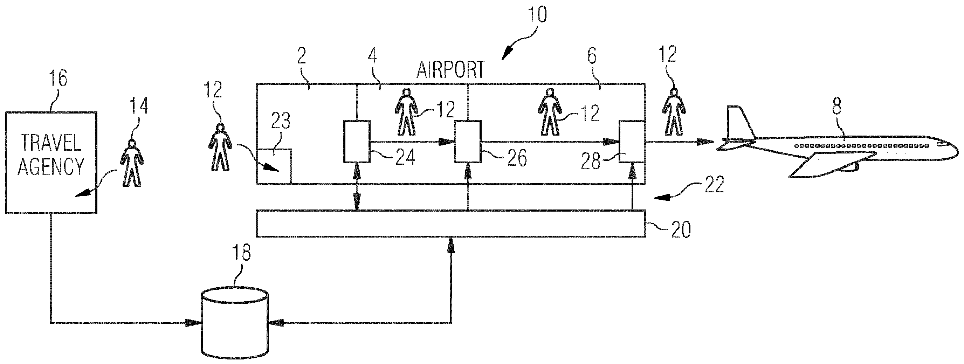

Vorteilhafte Ausführungsbeispiele der vorliegenden Erfindung werden nachfolgend mit Bezug auf die anhängende Zeichnung näher erläutert. Dabei zeigt die Figur schematisch ein Verfahren zur Gewährung des Zugangs zu geschützten Bereichen 4, 6 und 8 in einem Flughafen 10. Das Verfahren weist dabei im Wesentlichen die folgenden Verfahrensschritte auf:
Ursächlich für die Auslösung des Verfahrens zur Gewährung eines Personenzugangs zu von einem Fluggast 12 zu betretenen geschützten Bereichen 4 bis 8 in dem Flughafen 10 ist das Festlegen eines Ereignisses, hier beispielhaft eine Flugbuchung durch einen Reisebürobesucher 14 in einem Reisebüro 16. Dieses Ereignis (die Flugbuchung) macht es erforderlich, dass zur Gewährung der mit dem Ereignis verbundenen Dienstleistung der Fluggast 12 einen Zugang zu den geschützten Bereichen 4 bis 8 des Flughafens 10 erhält.

Mit der Flugbuchung werden die Person individualisierende zuvor gespeicherte biometrische Daten von einem entsprechenden Speicher abgerufen. Dies kann einerseits ein Datensatz sein, der auf dem Reisepass des Fluggastes 12 hinterlegt ist und ausgelesen werden kann. Andererseits kann das Reisebüro 16 die persönlichen Daten des Fluggastes 12 an eine hoheitliche Ausweisdatenbank 18 übertragen. Die biometrischen Daten des Fluggastes 12 können dann von dieser hoheitlichen Ausweisdatenbank 18 für einen Zugangsdatenpool 20 eines Zugangssystems 22 des Flughafens 10 zur Verfügung gestellt werden. Dieses Zugangssystem 22 administriert Zugangspunkte 24, 26, 28 zu den geschützten Bereichen 4, 6, 8.

Kommt nun der Fluggast 12 in die Eingangshalle 2 des Flughafens 10, ist es vorgesehen, dass die biometrischen Daten des Fluggastes 12 an einem ersten Anmeldepunkt 23 erfasst werden können. Dieser Anmeldepunkt 23 kann beispielsweise auch ein Check-In-Schalter oder ein Check-In-Terminal sein. Somit ist dem Zugangssystem 22 nun bekannt, dass der Fluggast 12 im Flughafen eingetroffen ist. Bei einer elektronischen Buchung des Flugtickets und einem elektronischen Check-In bedarf es natürlich dieses Schrittes nicht.

Bevor der Fluggast 12 nun zur Sicherheitskontrolle 2 gelangen kann, muss der Fluggast 12 einen Zugangspunkt 24 passieren. Hier genügt es nun, wenn der Fluggast 12 entweder die Iris seines Auges und/oder seinen Fingerabdruck an dem Zugangspunkt 24 erfasst. Das Zugangssystem 22 führt dann einen Vergleich der erfassten biometrischen Daten mit den im Zugangsdatenpool 20 befindlichen biometrischen Daten durch und gewährt den Zugang zu dem geschützten Bereich, hier die Sicherheitskontrolle 4, im Falle eines Vorhandenseins der erfassten biometrischen Daten in dem Zugangsdatenpool 20.

Nach der Sicherheitskontrolle 4 begibt sich der Fluggast zum nächsten Zugangspunkt 26, hier beispielsweise eine Passkontrolle, an der neben seinem Reisepass auch seine biometrischen Daten erfasst und mit den Daten im Zugangsdatenpool 20 verglichen werden. Zusätzlich können auch nicht die auf dem Reisepass befindlichen biometrischen Daten mit diesen Daten verglichen werden.

Auch hier benötigt der Fluggast 12 keine Bordkarte aus Papier oder ein ähnliches elektronisches Dokument, sondern der Sitzplatz in letzten hier gezeigten geschützten Bereich, nämlich dem Flugzeug 8 selbst, kann beispielsweise direkt mit der Buchung zugewiesen werden.

Bei der Übereinstimmung der biometrischen Daten kann sich der Fluggast 12 dann in einen Wartebereich 6 vor seinem Abfluggate begeben. Mit dem Aufruf zum Einsteigen in das Flugzeug 8 muss ein letzter Zugangspunkt 28 passiert werden, an dem wiederum die biometrischen Daten des Fluggastes 12 erfasst werden müssen. Dies kann beispielsweise ganz einfach durch Auflegen des rechten Daumen des Fluggastes 12 auf einen Fingerprint-Sensor erfolgen. Auch hier erhält der Fluggast 12 nach übereinstimmenden Datensätzen von erfassten Daten und in dem Zugangsdatenpool gespeicherten Daten Zugang zu dem Flugzeug 8.

Somit ist der gesamte Zugangsprozess sowohl papierlos als auch nicht mehr von dem ordnungsgemässen Funktionieren eines elektronischen Kommunikationsgeräts, heute in der Regel ein Smart Phone, abhängig.

Das erfindungsgemässe Verfahren kann allgemein eine Vielzahl weiterer vorteilhafter Ausgestaltungen aufweisen. So kann beispielsweise mit der Festlegung des Ereignisses die Datenbank 18, auf der die biometrischen Daten der Person gespeichert sind, aufgefordert werden, die biometrischen Daten an den Zugangsdatenpool 20 zu übertragen. Zusätzlich kann mit der Festlegung des Ereignisses ein Zeitraum definiert werden, während dessen der Person 12 Zugang zu den geschützten Bereichen 4, 6, 8 gewährt werden soll. Dementsprechend kann entsprechend des definierten Zeitraums eine Gültigkeit des Datensatzes der biometrischen Daten in dem Zugangsdatenpool 20 auf genau diesen Zeitraum limitiert ist. Folglich ist es natürlich auch sinnvoll, wenn bei einer Änderung des Ereignisses, was ja beispielsweise bei Abflugzeiten relativ häufig ist, entsprechend auch der definierte Zeitraum an die Änderung angepasst wird.

Wie schon weiter oben beschrieben kann es zur genauen Definition der Datensätze, die tatsächlich im Zugangsdatenpool 20 erforderlich sind, vorgesehen sein, dass mit der erstmaligen Erfassung der biometischen Daten an einem mit dem Zugangssystem administrierten und für die erstmalige Erfassung bestimmten Anmeldepunkt 23 oder Zugangspunkt 24 der Datensatz, der mit den erfassten biometrischen Daten im Zugangsdatenpool 20 übereinstimmt, aktiviert und somit für weitere Erfassungsvergleiche an weiteren Zugangspunkten 24, 26, 28 zur Verfügung steht.

## Patentansprüche

1. Verfahren zur Gewährung eines Personenzugangs zu von der Person (12) zu betretenen geschützten Bereichen (4, 6, 8), umfassend die folgenden Verfahrensschritte:
a) Festlegen eines Ereignisses, das zur Gewährung der mit dem Ereignis verbundenen Dienstleistung einen Zugang zu den geschützten Bereichen (4, 6, 8) erfordert;
b) mit dem Festlegen des Ereignisses Abrufen von die Person individualisierenden zuvor gespeicherten biometrischen Daten von einem entsprechenden Speicher (18) ;
c) Zurverfügungstellen der biometrischen Daten für einen Zugangsdatenpool (20) eines Zugangssystems (22), das Zugangspunkte (24, 26, 28) zu den geschützten Bereichen (4, 6, 8) administriert;
d) Erfassen von biometrischen Daten einer Person an einem Anmeldepunkt (23) oder einem ersten Zugangspunkt (24), die Zugang zu dem durch den Zugangspunkt (24, 26, 28) zugänglichen geschützten Bereich (4, 6, 8) begehrt;
e) Vergleichen der erfassten biometrischen Daten mit den im Zugangsdatenpool (20) befindlichen biometrischen Daten; und
f) Gewährung des Zugangs zu dem geschützten Bereich (4, 6, 8) im Falle eines Vorhandenseins der erfassten biometrischen Daten in dem Zugangsdatenpool (20).

2. Verfahren nach Anspruch 1,
dadurch gekennezeichnet, dass
mit der Festlegung des Ereignisses eine Datenbank (18), auf der die biometrischen Daten der Person gespeichert sind, aufgefordert wird, die biometrischen Daten an den Zugangsdatenpool (20) zu übertragen.

3. Verfahren nach Anspruch 1 oder 2,
dadurch gekennezeichnet, dass
mit der Festlegung des Ereignisses ein Zeitraum definiert wird, während dessen der Person Zugang zu den geschützten Bereichen (4, 6, 8) gewährt werden soll.

4. Verfahren nach einem der vorangehenden Ansprüche,
**dadurch gekennzeichnet, dass**
entsprechend des definierten Zeitraums eine Gültigkeit des Datensatzes der biometrischen Daten in dem Zugangsdatenpool (20) auf diesen Zeitraum limitiert ist.

5. Verfahren nach Anspruch,
**dadurch gekennzeichnet, dass**
bei einer Änderung des Ereignisses entsprechend auch der definierte Zeitraum an die Änderung angepasst wird.

6. Verfahren nach einem der vorangehenden Ansprüche,
**dadurch gekennzeichnet, dass**
das festgelegte Ereignis ein Flugbuchung ist.

7. Verfahren nach einem der vorangehenden Ansprüche,
**dadurch gekennzeichnet, dass**
die Datenbank eine hoheitliche Datenbank (18) zur Speicherung von Passdaten ist.

8. Verfahren nach einem der vorangehenden Ansprüche,
**dadurch gekennzeichnet, dass**
die Zugangspunkte Personenschranken auf einem Flughafen und/oder für Haltestellen und/oder Zugangstüren in Verkehrsmittel des öffentlichen Fern- und Nahverkehrs sind.

9. Verfahren nach einem der vorangehenden Ansprüche,
**dadurch gekennzeichnet, dass**
mit der erstmaligen Erfassung der biometischen Daten an einem mit dem Zugangssystem administrierten und für die erstmalige Erfassung bestimmten Anmeldepunkt (23) /Zugangspunkt (24) der Datensatz, der mit den erfassten biometrischen Daten im Zugangsdatenpool (20) übereinstimmt, aktiviert wird und somit für weitere Erfassungsvergleiche an weiteren Zugangspunkten (26, 28) zur Verfügung steht.
